# EUROPÄISCHE PATENTSCHRIFT

(11) **EP 3 022 465 B1**
(45) Veröffentlichungstag und Bekanntmachung des Hinweises auf die Patenterteilung: **23.12.2020**
(21) Anmeldenummer: 14739032.2
(22) Anmeldetag: 10.06.2014
(51) Int. Cl.: F16H 57/021, F16H 57/022, F16H 57/023

(54) **GETRIEBE MIT EINEM ERSTEN UND EINEM ZWEITEN GEHÄUSETEIL**
TRANSMISSION HAVING A FIRST AND A SECOND HOUSING PART
TRANSMISSION POURVUE D'UNE PREMIÈRE ET D'UNE DEUXIÈME PARTIES DE CARTER

(30) Priorität: 16.07.2013 DE 102013011816
(43) Veröffentlichungstag der Anmeldung: 25.05.2016
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE)
(86) Internationale Anmeldenummer: PCT/EP2014/001571
(87) Internationale Veröffentlichungsnummer: WO 2015/007359

(56) Entgegenhaltungen:
- EP-A2- 0 280 776
- WO-A1-2005/111443
- DE-A1- 10 331 348
- DE-A1-102007 061 540

## Beschreibung

Die Erfindung betrifft ein Getriebe mit einem ersten und einem zweiten Gehäuseteil.

Es ist allgemein bekannt, dass Zwischenwellen von Getrieben über Lager in dem Getriebegehäuse gelagert sind.

**Aus der** DE 10 2007 061 540 A1 **ist eine Lagerbuchse für Achsantriebe als nächstliegender Stand der Technik bekannt.**

**Aus der** DE 103 31 348 A1 **ist eine Lagereinheit bekannt.**

**Aus der** WO 2005/111443 A1 **ist eine Lagerung für eine Antriebsritzelwelle eines Allradvorderachsgetriebes bekannt.**

**Aus der** EP 0 280 776 A2 **ist als nächstliegender Stand der Technik eine Lageranordnung für eine Kegelradwelle bekannt.**

Der Erfindung liegt daher die Aufgabe zugrunde, Getriebe weiterzubilden, wobei die Herstellung einfach sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit einem ersten und einem zweiten Gehäuseteil sind, dass eine Zwischenwelle des Getriebes über zwei Lager in einer die Lager aufnehmenden Buchse gelagert ist,
wobei die Buchse das erste Gehäuseteil gegen das zweite Gehäuseteil zentriert.

Von Vorteil ist dabei, dass die Lager samt Zwischenwelle in die Buchse einmontierbar sind und danach die gesamte so montierte Einheit in das erste Gehäuseteil einführbar und einpressbar ist. Danach wird das zweite Gehäuseteil aufgesteckt auf die aus dem ersten Gehäuseteil teilweise herausragende Buchse. Auf diese Weise sind die beiden Gehäuseteil aneinander zentrierbar und gleichzeitig die Montage vereinfacht. Die Gehäuseteile sind in einfacher Weise als Druckguss fertigbar.

Die Buchse ist als Druckgussteil, insbesondere bei Ausführung aus Metall, oder als Spritzgussteil, insbesondere bei Ausführung aus Kunststoff, herstellbar.

Durch den symmetrischen Aufbau der Buchse ist eine Fehlmontage in einfacher Weise verhinderbar. Dabei enthält die Symmetrieebene den Schwerpunkt der Buchse und die Zwischenwellenachsrichtung ist die Normalenrichtung zur Symmetrieebene.

**Von Vorteil ist dabei, dass geringere Andruckkräfte beim Einfügen der Lager in die Buchse notwendig sind und somit die Lager bei der Montage entlastet werden. Außerdem ist eine kostengünstigere Fertigung ermöglicht, insbesondere als Druckgussteil.**

Bei einer vorteilhaften Ausgestaltung sind **erste Tragrippen axial und/oder in Umfangsrichtung kürzer ausgeführt als zweite Tragrippen,**
**wobei in Umfangsrichtung hintereinander erste und zweite Tragrippen abwechselnd angeordnet sind**
**oder**
**wobei in Umfangsrichtung vor und hinter einer Gruppe von ersten Tragrippen jeweils eine zweite Tragrippe angeordnet ist.**

**Von Vorteil ist dabei, dass eine einfache Herstellung ermöglicht ist und die Lager ohne hohe Kräfte in ihre Aufnahme in der Buchse einführbar sind.**

Bei einer vorteilhaften Ausgestaltung weisen **eine oder mehrere der Tragrippen, insbesondere der zweiten tragrippen, jeweils eine Andruckfläche für ein Werkzeug zum axialen Herausdrücken aus einer Gussform auf. Von Vorteil ist dabei, dass eine einfache Herstellung ermöglicht ist und ein Herausdrücken der Buchse aus der Gussform in einfacher Weise, ohne dass die Buchse beschädigt wird. Daher sind die Andruckflächen vorzugsweise eben ausgeführt, wobei die Normalenrichtung der Ebene jeweils parallel zur axialen Richtung der Buchse ausgerichtet ist.**

Bei einer vorteilhaften Ausgestaltung sind **die ersten Tragrippen voneinander regelmäßig beabstandet und die zweiten Tragrippen sind voneinander regelmäßig voneinander beabstandet. Von Vorteil ist dabei, dass in Umfangsrichtung eine regelmäßige periodisch variierende Stabilität vorliegt und somit das Lager gleichmäßig belastbar ist.**

Bei einer vorteilhaften Ausgestaltung sind erstes und zweites Gehäuseteil schraubverbunden miteinander, wobei die Schraubverbindung außerhalb der Buchse angeordnet ist. Von Vorteil ist dabei, dass eine feste Verbindung herstellbar ist.

Bei einer vorteilhaften Ausgestaltung weist die Buchse einen äußeren Hülsenabschnitt auf, welcher an den Aufnahmebereichen der beiden Gehäuseteile anliegt. Von Vorteil ist dabei, dass eine tragfähige Struktur bei geringem Materialaufwand erreicht ist und außerdem Öffnungen für den Öldurchtritt vorhanden sind.

Bei einer vorteilhaften Ausgestaltung weist der äußere Hülsenabschnitt einen ersten axialen Abschnitt auf, der als Einführpassbereich ausgeführt ist, und einen zweiten axialen Abschnitt aufweist, der als Presspassbereich ausgeführt ist,
wobei die axiale Richtung der Zwischenwellenachse entspricht. Von Vorteil ist dabei, dass das Einführen in die Gehäuseteile erleichtert ist und der Presspassbereich insbesondere durch thermisches Aufschrumpfen tragfähig ist. Zusätzlich ist Klebstoff vorgesehen.

Bei einer vorteilhaften Ausgestaltung weist die Buchse einen inneren Hülsenabschnitt auf, der in einem ersten axialen Abschnitt ein erstes Lager der Zwischenwelle und in einem zweiten axialen Abschnitt ein zweites Lager der Zwischenwelle aufnimmt, wobei axial zwischen erstem und zweitem Abschnitt ein Stegabschnitt angeordnet ist, dessen kleinster Radialabstand kleiner ist als der kleinste Radialabstand des ersten oder zweiten Abschnitts. Von Vorteil ist dabei, dass eine tragfähige Struktur geschaffen ist, die axial durchgehende Öffnungen aufweist.

Bei einer vorteilhaften Ausgestaltung sind der innere und der äußere Hülsenabschnitt über Tragrippen verbunden, wobei die Tragrippen in Umfangsrichtung voneinander beabstandet sind, insbesondere regelmäßig voneinander beabstandet sind. Von Vorteil ist dabei, dass axial durchgehende Öffnungen für Öldurchtritt und somit für die Schmierung der beidseitig der Buchse angeordneten Verzahnungen und Lager vorsehbar sind.

Bei einer vorteilhaften Ausgestaltung sind die Lager Kegelrollenlager, insbesondere in O-Anordnung, X-Anordnung oder Tandemanordnung. Von Vorteil ist dabei, dass einfach herstellbare Lageranordnungen verwendbar sind.

Bei einer vorteilhaften Ausgestaltung ist die Zwischenwelle mit einem ersten Verzahnungsteil drehfest verbunden oder weist eine entsprechende Verzahnung auf, so dass ein erstes axiales Lager von dem Verzahnungsteil oder dem Verzahnungsabschnitt axial begrenzt ist,
wobei ein auf der hierzu abgewandten axialen Seite der Buchse ein weiteres Verzahnungsteil mit der Zwischenwelle drehfest verbunden ist, welches das andere Lager axial begrenzt, insbesondere wobei das weitere Verzahnungsteil mittels eines Sicherungsrings axial begrenzt ist. Von Vorteil ist dabei, dass das Anstellen der Lager in einfacher Weise erreichbar ist.

Bei einer vorteilhaften Ausgestaltung ist die Zwischenwelle mit einer Kegelritzelverzahnung versehen oder drehfest verbunden und/oder die Zwischenwelle ist mit einer schrägverzahnten Stirnradverzahnung versehen oder verbunden. Von Vorteil ist dabei, dass die Zwischenwelle in einfacher Weise herstellbar ist.

Bei einer vorteilhaften Ausgestaltung weist die Kegelritzelverzahnung mit einem im zweiten Gehäuseteil über dort aufgenommene Lager gelagerten Kegelrad im Eingriff ist. Von Vorteil ist dabei, dass die Buchse vorteiligerweise einen einfachen Aufbau eines Kegelgetriebes ermöglicht.

Bei einer vorteilhaften Ausgestaltung ist das erste Gehäuseteil mit einem Motorgehäuse verbunden, wobei eine Rotorwelle über im Motorgehäuse aufgenommene Lager gelagert ist, wobei die Rotorwelle mit einem eintreibenden Verzahnungsteil des Getriebes drehfest verbunden ist, wobei das eintreibende Verzahnungsteil vom ersten Gehäuseteil radial umgeben ist. Von Vorteil ist dabei, dass das eintreibende Verzahnungsteil im Getriebe angeordnet ist und über den Motor gelagert ist.

Bei einer vorteilhaften Ausgestaltung steht das mit der Zwischenwelle drehfest verbundene Verzahnungsteil im Eingriff mit dem mit der Rotorwelle verbundenen, eintreibenden Verzahnungsteil. Von Vorteil ist dabei, dass das eintreibende Verzahnungsteil über den Elektromotor lagerbar ist.

Bei einer vorteilhaften Ausgestaltung ist die Buchse in einen Aufnahmebereich des ersten Gehäuseteils eingepresst und in einen hierzu koaxial angeordneten Aufnahmebereich des zweiten Gehäuseteils. Von Vorteil ist dabei, dass ein zentrieren mittels der Buchse ausführbar ist.

Bei einer vorteilhaften Ausgestaltung sind erstes und zweites Gehäuseteil dicht verbunden. Von Vorteil ist dabei, dass Öl im Getriebeinneren einsetzbar ist.

Bei einer vorteilhaften Ausgestaltung ist zwischen einem der Gehäuseteile und der Buchse ein ringförmiger Raumbereich zur Aufnahme von Klebstoff angeordnet, insbesondere wobei der Raumbereich durch eine Vertiefung in der Buchse und den Aufnahmebereich des Gehäuseteils für die Buchse begrenzt ist. Von Vorteil ist dabei, dass mittels der Klebstoffverbindung eine Verdrehsicherung der Buchse zum Gehäuse erreichbar ist, obwohl die Buchse sich bei Montage vor Aushärten des Klebstoffs drehen lässt und somit ein Setzen der Lager beförderbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

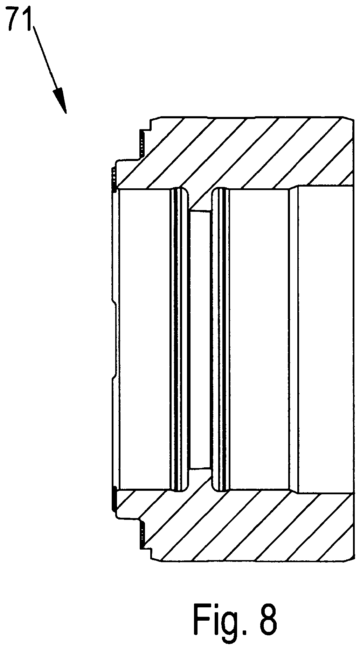

Die Erfindung wird nun anhand von Abbildungen näher erläutert:
In der Figur 1 ist eine Schnittansicht durch ein erfindungsgemäßes Getriebe mit einer Buchse 11 gezeigt.
In der Figur 2 ist die Buchse 11 in Schrägansicht dargestellt.
In der Figur 3 ist die Buchse 11 in Draufansicht dargestellt.
In der Figur 4 ist die Buchse 11 in Schnittansicht dargestellt.
**In der** **Figur 5** **ist eine andere Buchse 51 gezeigt, die statt der Buchse 11 eingesetzt wird, wobei die Tragrippen verschieden sind.**
**In der** **Figur 6** **ist ein zur Buchse 51 gehöriger Querschnitt gezeigt.**
**In der** **Figur 7** **ist eine weitere Buchse 71 gezeigt, die statt der Buchse 11 eingesetzt wird und einfach herstellbar ist.**
**In der** **Figur 8** **ist die Buchse 71 im Querschnitt gezeigt, wobei die Lageraufnahmen nicht mehr axial symmetrisch sind.**

Das Gehäuse des Getriebes weist zumindest zwei Gehäuseteile (12, 14) auf, die mittels der Buchse 11 zueinander zentriert sind.

Dabei nimmt die Buchse 11 zwei Lager (8, 10) auf, über welche eine Zwischenwelle 18 gelagert ist, die an ihrem eingangsseitigen axialen Endbereich mit einem Zahnrad 20 drehfest verbunden ist, welches im Eingriff ist mit einem eintreibenden Zahnrad16, das mit einer eintreibenden Welle 17, insbesondere ein Rotor eines antreibenden, nicht dargestellten Elektromotors, drehfest verbunden ist. Dabei ist das Zahnrad 16 mit der Welle 17 gelagert im Gehäuse der antreibenden Vorrichtung, insbesondere Elektromotor. Das Gehäuse der antreibenden Vorrichtung ist mit dem ersten Gehäuseteil 12 verbunden, wobei hier ein Zentriermittel, insbesondere ein Zentrierbund, am ersten Gehäuseteil 12 ausgeformt ist.

An seinem anderen axialen Endbereich ist die Zwischenwelle 18 mit dem Kegelritzel 9 drehfest verbunden. Alternativ ist die Zwischenwelle 18 mit dem Kegelritzel 9 einstückig ausgeführt, so dass die Verzahnung des Kegelritzels in einem Wellenabschnitt der Zwischenwelle 18 eingearbeitet ist.

Das Kegelritzel 9 ist im Eingriff mit dem Kegelrad 13, welches über Lager mit zweiten Gehäuseteil 14 oder in einem mit dem zweiten Gehäuseteil 14 verbundenen Gehäuseteil gelagert ist.

Der Innenring des ersten Lagers 10 der Buchse 11 liegt an einer Wellenstufe, insbesondere an einem Wellenbund, der Zwischenwelle 18 an.

Der Außenring des ersten Lagers 10 liegt an einer Innenstufe der Innenwandung der Buchse 11 an.

Der Außenring des zweiten Lagers 8 liegt ebenfalls an einer Innenstufe der Innenwandung der Buchse 11 an. Dabei sind die beiden genannten Innenstufen durch einen sich nach radial innen erstreckenden, an der Innenwandung der Buchse 11 angeordneten ringförmigen Abschnitt gebildet, der radial von der Zwischenwelle 18 beabstandet ist.

Der Innenring des zweiten Lagers 8 liegt an dem Zahnrad 20 an, das axial durch einen auf der vom Lager 8 abgewandten Seite des Zahnrades 20 angeordneten Sicherungsrings 19.

Somit sind die Lager (8, 10) beispielhaft als Kegelrollenlager ausführbar und axial begrenzt gehalten.

Bei zweistückiger Ausführung des Kegelritzels 9 und der Zwischenwelle 18 ist ein axiales Begrenzungsmittel zwischen Kegelritzel 9 und Zwischenwelle 18 angeordnet.

Die Buchse 11 weist an ihrer Außenseite eine Vertiefung 7 auf und ist in den zylindrischen, vorzugsweise nicht gestuften Aufnahmebereichen der Gehäuseteile (12, 14) aufgenommen. Vorzugsweise werden die Aufnahmebereiche als Bohrung hergestellt.

Die Vertiefung 7 begrenzt somit mit der Wandung des Aufnahmebereichs des ersten Gehäuseteils 12 einen ringförmigen Raumbereich, in welchen Klebstoff einbringbar ist. Somit sorgt dann der Klebstoff für eine drehfeste Verbindung zwischen dem ersten Gehäuseteil 12 und der Buchse 11.

Zusätzlich weist die Buchse 11 an ihrer äußeren Oberfläche, also an der Außenfläche des äußeren Hülsenabschnitts 22, einen ersten axialen Abschnitt auf, der als Einführpassbereich 1 ausgeführt ist und das Einführen der Buchse 11 in den Aufnahmebereich erleichtert, und einen sich daran anschließenden axialen Abschnitt auf, der als Presspassbereich 2 wirksam ist, so dass eine hohe Haftreibung entsteht, auf.

Vorzugswiese wird der Aufnahmebereich des Gehäuseteils 12 auf die Buchse zusätzlich thermisch aufgeschrumpft. Hierzu wird beim Zusammenfügen ein Temperaturunterschied zwischen Buchse und Gehäuseteil 12 vorgesehen.

Ebenso weist die Buchse auch einen Einführpassbereich und einen Presspassbereich auf, die beim Verbinden mit dem zweiten Gehäuseteil 14 wirksam sind.

Die Buchse 11 weist einen inneren Hülsenabschnitt 21 und einen äußeren Hülsenabschnitt 22 auf, wobei der innere Hülsenabschnitt 21 die jeweiligen Außenringe der Lager (8, 10) aufnimmt und der äußere Hülsenabschnitt 22 die Aufnahmebereiche der Gehäuseteile (12, 14) berührt.

Im Radialabstandsbereich zwischen den beiden Hülsenabschnitten (21, 22) sind radial sich erstreckende speichenartig ausgeführte Tragrippen 4 angeordnet, so dass in Umfangsrichtung zwischen jeweils zwei nächstbenachbarten Tragrippen eine axial durchgehende Öffnung 3 vorhanden ist. Auf diese Weise ist Öl von der axial vorderen zur axial hinteren Seite der Buchse 11 hindurchführbar.

Tragrippen 4, äußerer Hülsenabschnitt 22 und innerer Hülsenabschnitt 21 sind vorzugsweise einstückig ausgeführt.

Die Buchse 11 ist vorzugsweise aus Stahl oder einem Metall wie Aluminium.

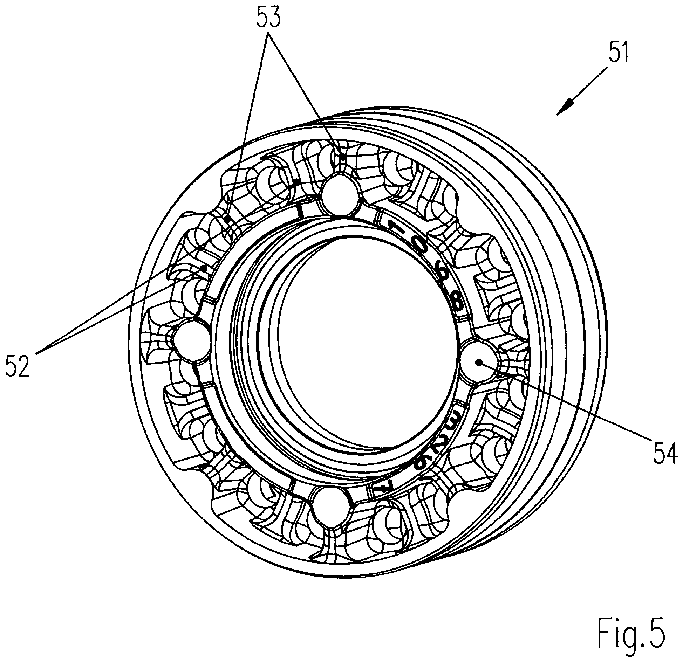

Bei einem weiteren erfindungsgemäßen Ausführungsbeispiel sind statt der gezeigten in O-Anordnung oder Tandemanordnung angeordneten Kegelrollenlager (8, 10) andere Lager verwendet, wie Kugelrollenlager.
Wie in der Figur 5 gezeigt, ist statt der Buchse 11 auch eine Buchse 51 einsetzbar, welche unterschiedliche Tragrippen aufweist. Dabei ist in Umfangsrichtung abwechselnd jeweils eine axial kürzere Tragrippe 52 und eine axial längere Tragrippe 53 gezeigt.

Somit ist eine einfache Herstellung der Buchse 51 ausführbar. Zum auswerfen der Buchse 51 bei der Herstellung in Druckguss sind auch Andruckfläche 54 für ein Werkzeug am der Buchse 51 angeordnet.

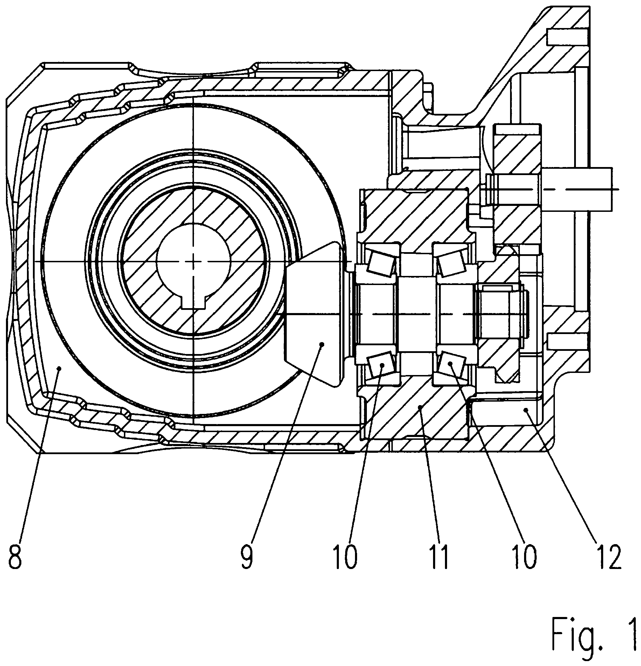

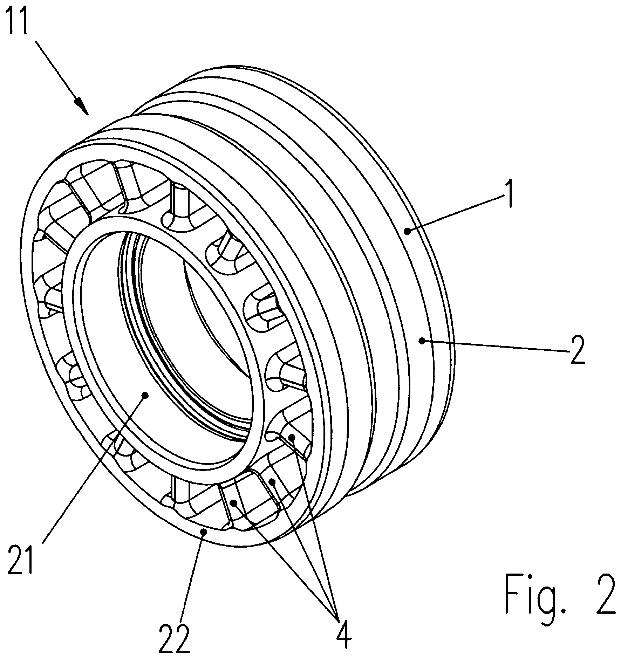

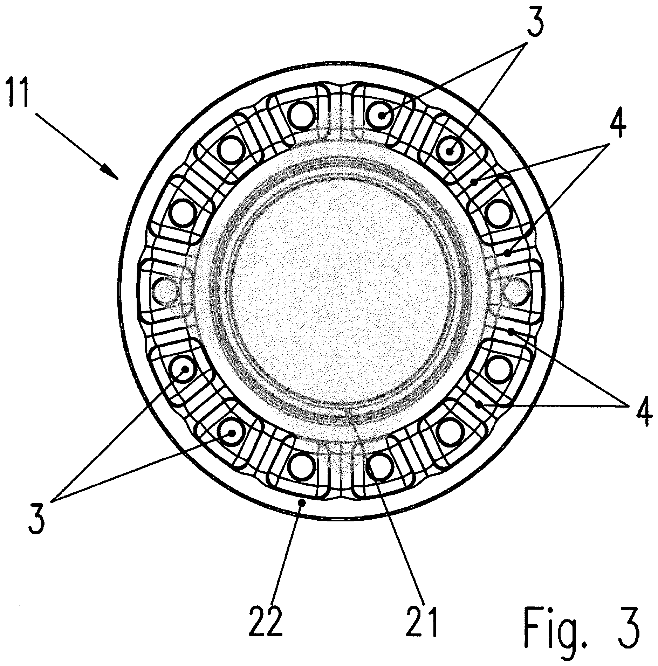

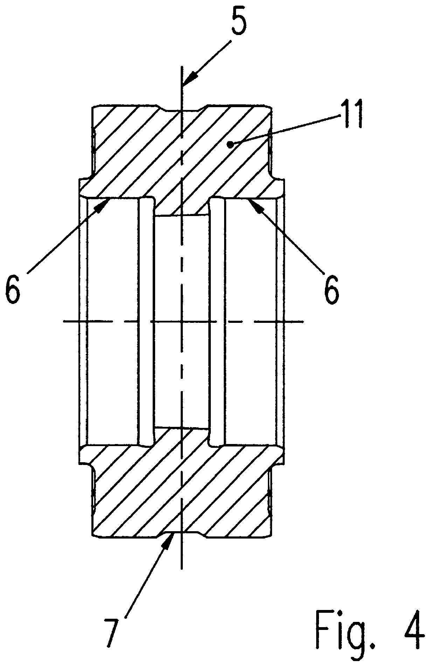

Durch die axial unterschiedlich langen tragrippen (52, 53) wird ein in die Lageraufnahme der Buchse 51 eingeführtes, insbesondere eingepasstes Lager, kraftschlüssig gut verbunden. Denn die axial kürzeren Tragrippen 52 verringern die Stabilität im axialen Endbereich, so dass dort eine elastisch verbiegbarer Bereich entsteht als im axialen Endbereich der Tragrippen 53. In Umfangsrichtung liegt also eine variierende Elastizität der Lageraufnahme vor, so dass beim Einschieben des Lagers in axialer Richtung in die Lageraufnahme geringere Kräfte aufzubringen sind als bei Ausführung nach Figur 1 bis 4.

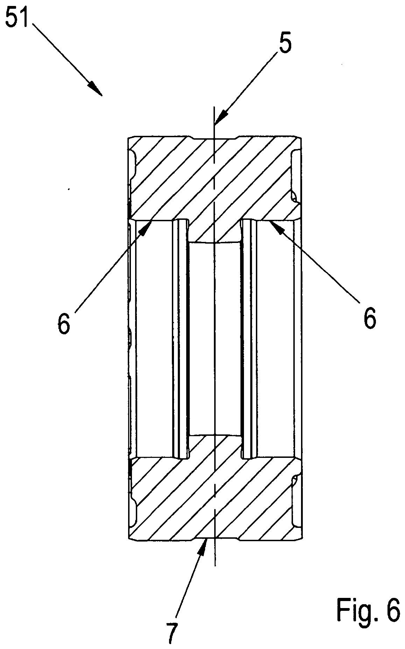

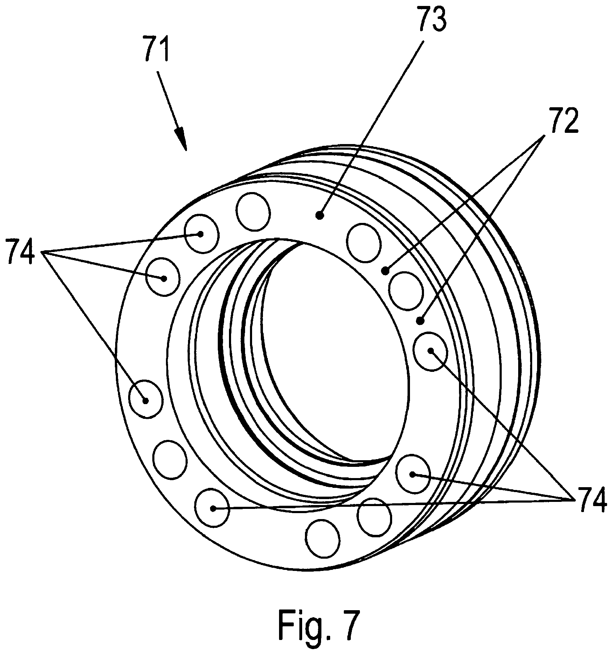

Wie in Figur 6 gezeigt, schließen die Lageraufnahmen axial genau gleich ab wie der äußere Umfang der Buchse 51. Somit entspricht die axiale Länge der Buchse 51 genau der durch die Aufnahmebereiche in den Gehäuseteilen 12 und 14 vorgegebenen axialen Länge
Ebenso sind bei der Buchse 71 nach Figur 7, die wiederum statt der Buchse 11 einsetzbar ist, unterschiedliche Tragrippen eingesetzt, so dass wiederum das Lager geringeren Kräften beim Einführen in die Lageraufnahme ausgesetzt ist.

Hierzu sind erste Tragrippen 72, welche in Umfangsrichtung kürzer sind, von Tragrippen 73 in Umfangsrichtung gefolgt, welche in Umfangsrichtung länger sind.

Die in Umfangsrichtung längeren Tragrippen 73 sind auch als bei der Herstellung in Druckguss zur Verfügung stehende Andruckflächen 54 für ein Werkzeug an der Buchse 51 verwendbar. Somit sind die Tragrippen (72, 73) axial gleich lang ausführbar. Die jeweils in Umfangsrichtung aufeinander folgende Tragrippe (72, 73) ist durch eine jeweilige, in Umfangsrichtung zwischengeordnete Ausnehmung begrenzbar. Die Ausnehmungen sind als jeweiliges Bohrloch 74 herstellbar.

Die Lageraufnahmen der Buchse 71 sind nicht mehr axial gleich lang.

### Bezugszeichenliste

1 Einführpassbereich
2 Presspassbereich
3 Ausnehmung, Durchgangsloch für Ölaustausch
4 Tragrippe
5 Symmetrielinie
6 Lageraufnahme
7 Vertiefung zur Bildung eines Raumbereichs für Klebeverbindung als Sicherung gegen Verdrehung
8 Lager
9 Kegelritzel
10 Lager
11 Buchse
12 erstes Gehäuseteil
13 Kegelrad
14 zweites Gehäuseteil
16 Zahnrad
17 Welle, insbesondere eintreibende Welle, insbesondere Rotor eines Elektromotors
18 Zwischenwelle
19 Sicherungsring
20 Zahnrad
21 innerer Hülsenabschnitt
22 äußerer Hülsenabschnitt
51 Buchse
52 axial kürzere Tragrippen
53 axial längere Tragrippen
54 Andruckfläche für Werkzeug
71 Buchse
72 in Umfangsrichtung kürzere Tragrippen
73 in Umfangsrichtung längere Tragrippen
74 Bohrloch

## Patentansprüche

1. Getriebe mit einem ersten und einem zweiten Gehäuseteil (12, 14),
wobei eine Zwischenwelle (18) des Getriebes über zwei Lager (10,10) in einer die Lager (10,10) aufnehmenden Buchse (11, 51, 71) gelagert ist,
wobei die Buchse (11, 51, 71) das erste Gehäuseteil (12) gegen das zweite Gehäuseteil (14) zentriert,
wobei **die Buchse (11, 51, 71) einen inneren Hülsenabschnitt (21) aufweist, der in einem ersten axialen Abschnitt** das erste Lager (10) **der Zwischenwelle (18) und in einem zweiten axialen Abschnitt** das zweite Lager (10) **der Zwischenwelle (18) aufnimmt,**
**wobei axial zwischen erstem und zweitem Abschnitt ein Stegabschnitt angeordnet ist, dessen kleinster Radialabstand kleiner ist als der kleinste Radialabstand des ersten oder zweiten Abschnitts,**
**wobei die Buchse (11, 51, 71) einen äußeren Hülsenabschnitt (22) aufweist, der vom inneren Hülsenabschnitt (21) radial beabstandet ist**
und **dadurch gekennzeichnet, dass der innere und der äußere Hülsenabschnitt (21, 22) über Tragrippen (4, 52, 53, 72, 73) verbunden sind, die sich im Radialabstandsbereich zwischen dem inneren Hülsenabschnitt (21) und dem äußeren Hülsenabschnitt (22) radial erstrecken und speichenartig ausgeführt sind,**
**wobei die Tragrippen (4, 52, 53, 72, 73) in Umfangsrichtung voneinander beabstandet sind,**
**wobei eine erste der Tragrippen (4, 52, 53, 72, 73) axial und/oder in Umfangsrichtung kürzer ausgeführt ist als eine zweite der Tragrippen (4, 52, 53, 72, 73),**
**wobei die Buchse (11, 51, 71) in einen Aufnahmebereich des ersten Gehäuseteils (12) eingepresst ist und in einen hierzu koaxial angeordneten Aufnahmebereich des zweiten Gehäuseteils (14),**
**wobei zwischen einem der Gehäuseteile und der Buchse (11, 51, 71) ein ringförmiger Raumbereich zur Aufnahme von Klebstoff angeordnet ist,**
**wobei der Raumbereich durch eine Vertiefung in der Buchse (11, 51, 71) und den Aufnahmebereich des Gehäuseteils für die Buchse (11, 51, 71) begrenzt ist.**

2. Getriebe nach Anspruch 1,
**dadurch gekennzeichnet, dass**
**erste Tragrippen (4, 52, 53, 72, 73) axial oder in Umfangsrichtung kürzer ausgeführt ist als zweite Tragrippen (4, 52, 53, 72, 73),**
**wobei in Umfangsrichtung hintereinander erste und zweite Tragrippen (4, 52, 53, 72, 73) abwechselnd angeordnet sind**
**oder**
**wobei in Umfangsrichtung vor und hinter einer Gruppe von ersten Tragrippen (4, 52, 53, 72, 73) jeweils eine zweite Tragrippe angeordnet ist.**

3. Getriebe nach mindestens einem der vorangegangenen Ansprüche,
**dadurch gekennzeichnet, dass**
**eine oder mehrere der Tragrippen (4, 52, 53, 72, 73), insbesondere der zweiten Tragrippen (4, 52, 53, 72, 73), jeweils eine Andruckfläche für ein Werkzeug zum axialen Herausdrücken aus einer Gussform aufweisen.**

4. Getriebe nach mindestens einem der vorangegangenen Ansprüche,
**dadurch gekennzeichnet, dass**
**die ersten Tragrippen (4, 52, 53, 72, 73) voneinander regelmäßig beabstandet sind und die zweiten Tragrippen (4, 52, 53, 72, 73) voneinander regelmäßig voneinander beabstandet sind.**

5. Getriebe nach mindestens einem der vorangegangenen Ansprüche,
**dadurch gekennzeichnet, dass**
erstes und zweites Gehäuseteil (12, 14) schraubverbunden miteinander sind, wobei die Schraubverbindung außerhalb der Buchse (11, 51, 71) angeordnet ist.

6. Getriebe nach mindestens einem der vorangegangenen Ansprüche,
**dadurch gekennzeichnet, dass**
die Buchse (11, 51, 71) einen äußeren Hülsenabschnitt (22) aufweist, welcher an den Aufnahmebereichen der beiden Gehäuseteile (12, 14) anliegt.

7. Getriebe nach mindestens einem der vorangegangenen Ansprüche,
**dadurch gekennzeichnet, dass**
der äußere Hülsenabschnitt (22) einen ersten axialen Abschnitt, aufweist, der als Einführpassbereich (1) ausgeführt ist, und einen zweiten axialen Abschnitt aufweist, der als Presspassbereich (2) ausgeführt ist,
wobei die axiale Richtung der Zwischenwellenachse entspricht.

8. Getriebe nach mindestens einem der vorangegangenen Ansprüche,
**dadurch gekennzeichnet, dass**
die Lager (8, 10) Kegelrollenlager, insbesondere in O-Anordnung, X-Anordnung oder Tandemanordnung, sind.

9. Getriebe nach mindestens einem der vorangegangenen Ansprüche,
**dadurch gekennzeichnet, dass**
die Zwischenwelle (18) mit einem ersten Verzahnungsteil drehfest verbunden ist oder eine entsprechende Verzahnung aufweist, so dass ein erstes axiales Lager (8, 10) von dem Verzahnungsteil oder dem Verzahnungsabschnitt axial begrenzt ist,
wobei ein auf der hierzu abgewandten axialen Seite der Buchse (11, 51, 71) ein weiteres Verzahnungsteil mit der Zwischenwelle (18) drehfest verbunden ist, welches das andere Lager (8, 10) axial begrenzt, insbesondere wobei das weitere Verzahnungsteil mittels eines Sicherungsrings axial begrenzt ist.

10. Getriebe nach mindestens einem der vorangegangenen Ansprüche,
**dadurch gekennzeichnet, dass**
die Zwischenwelle (18) mit einer Kegelritzelverzahnung versehen oder drehfest verbunden ist und/oder die Zwischenwelle (18) mit einer schrägverzahnten Stirnradverzahnung versehen oder verbunden ist.

11. Getriebe nach mindestens einem der vorangegangenen Ansprüche,
**dadurch gekennzeichnet, dass**
die Kegelritzelverzahnung mit einem im zweiten Gehäuseteil (14) über dort aufgenommene Lager (8, 10) gelagerten Kegelrad im Eingriff ist.

12. Getriebe nach mindestens einem der vorangegangenen Ansprüche,
**dadurch gekennzeichnet, dass**
das erste Gehäuseteil (12) mit einem Motorgehäuse verbunden ist,
wobei eine Rotorwelle über im Motorgehäuse aufgenommene Lager gelagert ist, wobei die Rotorwelle mit einem eintreibenden Verzahnungsteil des Getriebes drehfest verbunden ist, wobei das eintreibende Verzahnungsteil vom ersten Gehäuseteil (12) radial umgeben ist.

13. Getriebe nach mindestens einem der vorangegangenen Ansprüche,
**dadurch gekennzeichnet, dass**
das mit der Zwischenwelle (18) drehfest verbundene Verzahnungsteil im Eingriff steht mit dem mit der Rotorwelle verbundenen, eintreibenden Verzahnungsteil.

## Claims

1. A transmission having a first and a second housing part (12, 14),
an intermediate shaft (18) of the transmission being mounted via two bearings (10, 10) in a bushing (11, 51, 71) accommodating the bearings (10, 10),
the bushing (11, 51, 71) centring the first housing part (12) with respect to the second housing part (14),
the bushing (11, 51, 71) comprising an inner sleeve section (21) which accommodates in a first axial section the first bearing (10) of the intermediate shaft (18) and in a second axial section the second bearing (10) of the intermediate shaft (18),
a web section being arranged axially between the first and second sections, the smallest radial clearance of which is smaller than the smallest radial clearance of the first or second section,
the bushing (11, 51, 71) comprising an outer sleeve section (22) which is radially spaced from the inner sleeve section (21),
**characterised in that**
the inner and outer sleeve sections (21, 22) are connected via support ribs (4, 52, 53, 72, 73)
which extend radially in the radial clearance region between the inner sleeve section (21) and the outer sleeve section (22) and which are designed in the form of spokes,
the support ribs (4, 52, 53, 72, 73) being spaced apart from one another in the circumferential direction,
a first one of the support ribs (4, 52, 53, 72, 73) being designed so as to be axially shorter and/or shorter in the circumferential direction than a second one of the support ribs (4, 52, 53, 72, 73),
the bushing (11, 51, 71) being pressed into a receiving region of the first housing part (12) and into a receiving region of the second housing part (14) arranged coaxially thereto,
an annular spatial region for receiving an adhesive being arranged between one of the housing parts and the bushing (11, 51, 71),
the spatial region being delimited by a depression in the bushing (11, 51, 71) and the receiving region of the housing part for the bushing (11, 51, 71).

2. The transmission according to claim 1,
**characterised in that**
first support ribs (4, 52, 53, 72, 73) are designed so as to be axially shorter or shorter in the circumferential direction than second support ribs (4, 52, 53, 72, 73),
first and second support ribs (4, 52, 53, 72, 73) being arranged alternately one behind the other in the circumferential direction
or
a second support rib respectively being arranged in front of and behind a group of first support ribs (4, 52, 53, 72, 73) in the circumferential direction.

3. The transmission according to at least one of the preceding claims,
**characterised in that**
one or more of the support ribs (4, 52, 53, 72, 73), in particular of the second support ribs (4, 52, 53, 72, 73), each have a contact pressure surface for a tool for axially pushing them out of a casting mould.

4. The transmission according to at least one of the preceding claims,
**characterised in that**
the first support ribs (4, 52, 53, 72, 73) are regularly spaced from one another and the second support ribs (4, 52, 53, 72, 73) are regularly spaced from one another.

5. The transmission according to at least one of the preceding claims,
**characterised in that**
the first and second housing parts (12, 14) are connected to one another by way of screws, the screw connection being arranged outside the bushing (11, 51, 71).

6. The transmission according to at least one of the preceding claims,
**characterised in that**
the bushing (11, 51, 71) comprises an outer sleeve section (22) which abuts against the receiving regions of the two housing parts (12, 14).

7. The transmission according to at least one of the preceding claims,
**characterised in that**
the outer sleeve section (22) has a first axial section designed as an insertion-fit region (1) and a second axial section designed as a press-fit region (2),
the axial direction corresponding to the axis of the intermediate shaft.

8. The transmission according to at least one of the preceding claims,
**characterised in that**
the bearings (8, 10) are tapered roller bearings, in particular in an O-arrangement, an X-arrangement or a tandem arrangement.

9. The transmission according to at least one of the preceding claims,
**characterised in that**
the intermediate shaft (18) is connected to a first toothed part in a manner that prevents rotation, or it has corresponding teeth, such that a first axial bearing (8, 10) is axially delimited by the toothed part or the toothed section,
a further toothed part being connected to the intermediate shaft (18) in a manner that prevents rotation on the axial side of the bushing (11, 51, 71) facing away therefrom, which axially delimits the other bearing (8, 10), the further toothed part in particular being axially delimited by a securing ring.

10. The transmission according to at least one of the preceding claims,
**characterised in that**
the intermediate shaft (18) is provided with bevel pinion teeth or is connected thereto in a manner that prevents rotation and/or the intermediate shaft (18) is provided with helical spur gear teeth or is connected thereto.

11. The transmission according to at least one of the preceding claims,
**characterised in that**
the bevel pinion teeth are engaged with a bevel gear mounted in the second housing part (14) via bearings (8, 10) accommodated therein.

12. The transmission according to at least one of the preceding claims,
**characterised in that**
the first housing part (12) is connected to a motor housing,
a rotor shaft being mounted via bearings accommodated in the motor housing, the rotor shaft being connected to a driving toothed part of the transmission in a manner that prevents rotation, the driving toothed part being radially surrounded by the first housing part (12).

13. The transmission according to at least one of the preceding claims,
**characterised in that**
the toothed part that is connected to the intermediate shaft (18) in a manner that prevents rotation is engaged with the driving toothed part that is connected to the rotor shaft.

## Revendications

1. Transmission pourvue de première et seconde parties (12, 14) de carter,
un arbre intermédiaire (18) de ladite transmission étant monté, au moyen de deux paliers (10, 10), dans une douille (11, 51, 71) qui reçoit lesdits paliers (10, 10),
laquelle douille (11, 51, 71) assure le centrage de la première partie (12) du carter contre la seconde partie (14) dudit carter,
ladite douille (11, 51, 71) comprenant une région intérieure (21) recevant le premier palier (10) de l'arbre intermédiaire (18) sur un premier tronçon axial, et le second palier (10) dudit arbre intermédiaire (18) sur un second tronçon axial,
avec interposition axiale, entre lesdits premier et second tronçons, d'une zone d'entretoisement dont l'espacement radial minimal est plus petit que l'espacement radial minimal du premier ou du second tronçon,
la douille (11, 51, 71) comprenant une région extérieure (22) située radialement à distance de la région intérieure (21) de ladite douille,
**caractérisée par le fait que**
les régions intérieure et extérieure (21, 22) de la douille sont reliées par l'intermédiaire de nervures de support (4, 52, 53, 72, 73)
qui s'étendent radialement entre ladite région intérieure (21) et ladite région extérieure (22) de la douille, dans la zone d'espacement radial, et sont réalisées à la manière de rayons,
lesdites nervures de support (4, 52, 53, 72, 73) étant distantes les unes des autres dans la direction périphérique,
une première nervure, au sein desdites nervures de support (4, 52, 53, 72, 73), étant réalisée plus courte, dans le sens axial et/ou dans la direction périphérique, qu'une deuxième nervure au sein desdites nervures de support (4, 52, 53, 72, 73),
sachant que la douille (11, 51, 71) est emmanchée à force dans une zone réceptrice de la première partie (12) du carter et dans une zone réceptrice de la seconde partie (14) dudit carter, coaxiale à la zone précitée,
une zone spatiale annulaire, conçue pour recevoir un adhésif, étant interposée entre ladite douille (11, 51, 71) et l'une des parties dudit carter,
laquelle zone spatiale est délimitée par un renfoncement ménagé dans la douille (11, 51, 71) et par la zone réceptrice de la partie du carter qui est dévolue à ladite douille (11, 51, 71).

2. Transmission selon la revendication 1,
**caractérisée par le fait que**
des premières nervures de support (4, 52, 53, 72, 73) sont réalisées plus courtes que des deuxièmes nervures de support (4, 52, 53, 72, 73), dans le sens axial ou dans la direction périphérique,
des premières et deuxièmes nervures de support (4, 52, 53, 72, 73) étant agencées en succession alternée, dans la direction périphérique,
ou
une deuxième nervure de support étant disposée à chaque fois, dans la direction périphérique, devant et derrière un groupe de premières nervures de support (4, 52, 53, 72, 73).

3. Transmission selon au moins l'une des revendications précédentes,
**caractérisée par le fait que**
l'une ou plusieurs des nervures de support (4, 52, 53, 72, 73), notamment des deuxièmes nervures de support (4, 52, 53, 72, 73), est (sont) respectivement pourvue(s) d'une surface de pression affectée à un outil, en vue de l'expulsion axiale hors d'un moule de coulée.

4. Transmission selon au moins l'une des revendications précédentes,
**caractérisée par le fait que**
les premières nervures de support (4, 52, 53, 72, 73) sont régulièrement espacées les unes des autres, et les deuxièmes nervures de support (4, 52, 53, 72, 73) sont régulièrement espacées les unes des autres.

5. Transmission selon au moins l'une des revendications précédentes,
**caractérisée par le fait que**
les première et seconde parties (12, 14) du carter sont reliées l'une à l'autre par vissage, la liaison vissée étant située à l'extérieur de la douille (11, 51, 71).

6. Transmission selon au moins l'une des revendications précédentes,
**caractérisée par le fait que**
la douille (11, 51, 71) est munie d'une région extérieure (22) en applique sur les zones réceptrices des deux parties (12, 14) du carter.

7. Transmission selon au moins l'une des revendications précédentes,
**caractérisée par le fait que**
la région extérieure (22) de la douille comprend un premier tronçon axial réalisé sous la forme d'une zone (1) d'ajustement par insertion, et un second tronçon axial réalisé sous la forme d'une zone (2) d'ajustement serré,
la direction axiale correspondant à l'axe de l'arbre intermédiaire.

8. Transmission selon au moins l'une des revendications précédentes,
**caractérisée par le fait que**
les paliers (8, 10) sont des paliers à rouleaux coniques agencés, en particulier, suivant une configuration en O, une configuration en X ou une configuration en tandem.

9. Transmission selon au moins l'une des revendications précédentes,
**caractérisée par le fait que**
l'arbre intermédiaire (18) est relié à une première partie dentée, avec verrouillage rotatif, ou présente une denture correspondante, de telle sorte qu'un premier palier axial (8, 10) soit délimité axialement par ladite partie dentée, ou par la région dentée,
sachant qu'une partie dentée supplémentaire reliée audit arbre intermédiaire (18) avec verrouillage rotatif, sur le côté axial de la douille (11, 51, 71) tourné à l'opposé, délimite l'autre palier (8, 10) dans le sens axial, ladite partie dentée supplémentaire étant notamment délimitée, dans le sens axial, au moyen d'une bague d'arrêt.

10. Transmission selon au moins l'une des revendications précédentes,
**caractérisée par le fait que**
l'arbre intermédiaire (18) est muni d'une denture de pignon conique, ou est relié à celle-ci avec verrouillage rotatif, et/ou ledit arbre intermédiaire (18) est pourvu d'une denture de pignon droit à dents inclinées, ou est relié à cette dernière.

11. Transmission selon au moins l'une des revendications précédentes,
**caractérisée par le fait que**
la denture de pignon conique est en prise avec une roue conique montée dans la seconde partie (14) du carter par l'intermédiaire de paliers (8, 10) logés dans cette dernière.

12. Transmission selon au moins l'une des revendications précédentes,
**caractérisée par le fait que**
la première partie (12) du carter est reliée à un carter de moteur,
un arbre rotorique étant monté par l'intermédiaire de paliers logés dans ledit carter de moteur, ledit arbre rotorique étant relié, avec verrouillage rotatif, à une partie dentée menante de la transmission, laquelle partie dentée menante est entourée radialement par ladite première partie (12) du carter.

13. Transmission selon au moins l'une des revendications précédentes,
**caractérisée par le fait que**
la partie dentée, reliée à l'arbre intermédiaire (18) avec verrouillage rotatif, est en prise avec la partie dentée menante reliée à l'arbre rotorique.
